# EUROPEAN PATENT APPLICATION

(11) **EP 4 811 501 A1**
(43) Date of publication of application: **23.09.2026**
(21) Application number: 25742319.4
(22) Date of filing: 17.01.2025
(51) Int. Cl.: H01M 10/659, H01M 10/6567, H01M 10/613, H01M 10/625

(54) **ENDOTHERMIC PAD FOR SECONDARY BATTERY AND BATTERY PACK INCLUDING SAME**

(30) Priority: 19.01.2024 KR 20240008631
(71) Applicant: LG Energy Solution, Ltd., Seoul 07335 (KR)
(72) Inventor: PARK, Jun Kyu, Daejeon 34122 (KR); LEE, Jin Kyu, Daejeon 34122 (KR); YOON, Doo Han, Daejeon 34122 (KR)
(74) Representative: Plasseraud IP
(86) International application number: PCT/KR2025/099062
(87) International publication number: WO 2025/155171

(57) **Abstract**

An endothermic pad for a secondary battery includes a pouch having an inner space and an endothermic material accommodated within the inner space. The pouch includes a bending part processed by a forming process to define the inner space. The bending part remains bent when no external force is applied from outside the pouch. Also provided is a battery pack.

## Description

### [Technical Field]

The present disclosure relates to an endothermic pad for a secondary battery and a battery pack including the same, and more particularly to an endothermic pad for a secondary battery and a battery pack including the same, which has a high endothermic efficiency and can contribute to an increase in energy density.

This application claims the benefit of priority from Korean Patent Application No. 10-2024-0008631, filed on Jan. 19, 2024, the disclosures of which are incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, the main use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

Meanwhile, the demand for large-capacity battery packs applied to electric vehicles is increasing. Large-capacity battery packs in automobiles are required to increase safety while increasing capacity.

### [Summary]

### [Technical Problem]

The first technical challenge that the present disclosure aims to fulfill is to provide an endothermic pad for a secondary battery that has good endothermic efficiency and can contribute to the improvement of energy density.

The second technical challenge that the present disclosure aims to fulfill is to provide a battery pack with good endothermic efficiency and that can contribute to the improvement of energy density.

### [Technical Solution]

To fulfill the first technical challenge, the present disclosure provides an endothermic pad for a secondary battery including a pouch having an inner space and an endothermic material accommodated within the inner space, wherein the pouch includes a bending part processed by a forming process to define the inner space, wherein the bending part remains bent when no external force is applied from outside the pouch.

In some aspects, the pouch may include bending parts in each of the first layer and the second layer corresponding to each other in shape.

In some aspects, the pouch may include a first layer and a second layer facing each other while defining the inner space, wherein at the bending part, the first layer and the second layer may extend at least partially while keeping a constant distance from each other.

In some aspects, the endothermic pad may further include a super absorbent polymer, wherein the endothermic material may be absorbed by the super absorbent polymer.

In some aspects, the super absorbent polymer may be in a powdered state and the endothermic substance may be water.

In some aspects, the pouch may include a first layer and a second layer facing each other while defining the inner space, the pouch may include a pattern of the bending part repeating a plurality of times at predetermined spacings in at least one of the first layer and the second layer.

To fulfill the second technical challenge, in a vertical coordinate system defined by a first direction, a second direction, and a third direction that are perpendicular to each other, the present disclosure provides a battery pack including: a plurality of battery cells arranged in the first direction; at least one endothermic pad disposed between the plurality of battery cells; and a pack housing storing the plurality of battery cells, wherein the endothermic pad includes: a pouch comprising a bending part corresponding to at least a portion of the outer shape of the battery cell; and a super absorbent polymer and an endothermic material absorbed by the super absorbent polymer.

In some aspects, the endothermic pad may be provided between two neighboring battery cells.

In some aspects, the bending part of the pouch may remain bent when no external force is applied by the battery cells.

In some aspects, the endothermic pad may be provided between the battery cell and the pack housing, wherein the endothermic pad may include a bending part corresponding to the shape of the battery cell and the pack housing, wherein the bending part may be maintained in a bent state when no external force is applied by the battery cell and the pack housing.

In some aspects, the pouch may include a first layer and a second layer facing each other while defining the inner space, wherein at the bending part, the first layer and the second layer may extend at least partially while keeping a constant distance from each other.

In some aspects, a center part of the first layer is formed to be convex relative to an outer periphery of the first layer, and the entirety of the center part and outer periphery of the first layer may be bent.

### [Advantageous Effects]

The endothermic pad of the present disclosure has an outer shape corresponding to the complex shape of the cooling target, thereby providing excellent endothermic efficiency and contributing to improved energy density by increasing internal space efficiency.

The effects of the exemplary aspects of the present disclosure are not limited to those mentioned above, and other effects not mentioned may be clearly derived and understood by one having ordinary knowledge in the technical field to which the exemplary aspects of the present disclosure belong from the following description. In other words, unintended effects of practicing the exemplary aspects of the present disclosure may also be derived from the exemplary aspects of the present disclosure by one having ordinary knowledge in the technical field.

### [Brief Description of the Drawings]

FIG. 1 is a perspective view of a battery pack according to exemplary aspects of the present disclosure.
FIG. 2 is a perspective view illustrating some elements of a battery pack according to exemplary aspects of the present disclosure.
FIG. 3 is a side cross-sectional view illustrating a section through the endothermic pad of FIG. 1 along line III-III'.
FIG. 4 is an enlarged perspective view of a battery cell mounted within a lower case, according to one aspect of the present disclosure.
FIG. 5 is a schematic side cross-sectional view illustrating the endothermic pad inserted between the battery cells.
FIG. 6 is a side cross-sectional view of the endothermic pad of FIG. 5 without contact with the battery cells.
FIG. 7 is a perspective view illustrating an endothermic pad according to one aspect of the present disclosure.
FIG. 8 is a cross-sectional view illustrating a section through the endothermic pad of FIG. 7 along line VIII-VIII'.
FIG. 9 is a perspective view illustrating an endothermic pad according to another aspect of the present disclosure.
FIG. 10 is a cross-sectional view illustrating a section through the endothermic pad of FIG. 9 along line X-X'.
FIG. 11 is a side view schematically illustrating an electrified vehicle according to one aspect of the present disclosure.
FIG. 12 is a conceptual schematic illustration of a battery pack and other components mounted in the electrified vehicle.

### [Detailed Description]

Hereafter, the preferred aspects of the concept of the present disclosure will be described in detail with reference to the accompanying drawings. However, the aspects of the concept of the present disclosure may be modified in various other forms, and the scope of the concept of the present disclosure should not be construed as being limited to the aspects described below. It is desirable that the aspects of the concept of the present disclosure be construed as being provided to more fully explain the concept of the present disclosure to a person with average knowledge in the industry. The same symbols mean the same elements throughout. Furthermore, the various elements and areas in the drawings are depicted schematically. Therefore, the concept of the present disclosure is not limited by the relative sizes or spacings depicted in the accompanying drawings.

The terms "first," 'second,' etc. may be used to describe various components, but the components are not limited by the terms. The terms are used only to distinguish one component from another. For example, the first component may be named the second component and vice versa, without falling outside the scope of the rights of the concept of the present disclosure.

The terms used in this application are used merely to describe specific aspects and are not intended to limit the concept of the present disclosure. Singular expressions include plural expressions unless the context clearly indicates otherwise. In this application, the expressions 'comprising' or 'having' are to be understood as designating the presence of features, numbers, steps, actions, components, sub-components, or combinations thereof as described in the specification, but not as precluding the existence or addition of one or more other features, numbers, actions, components, sub-components, or combinations thereof.

Unless otherwise defined, all terms used herein, including technical terms and scientific terms, have the same meaning as commonly understood by a person of ordinary skill in the technical field to which the concept of the present disclosure belongs. It will also be understood that terms that are commonly used and defined in dictionaries should be interpreted as having a meaning consistent with their meaning in the context of the relevant technology, and should not be interpreted in an overly formal sense unless explicitly defined here.

In the event that a different aspect is otherwise possible, a specific process sequence may be performed differently from the sequence described. For example, two processes described in succession may be performed substantially simultaneously, or in the reverse order of the sequence described.

In the accompanying drawings, for example, variations of the shapes shown may be expected depending on the manufacturing technology and/or tolerances. Therefore, the aspects of the present disclosure should not be construed as being limited to the specific shapes of the areas shown in the specification, but should include, for example, changes in shape caused by the manufacturing process. All terms used herein 'and/or' include each of the components mentioned and all combinations of one or more of them. In addition, the term 'substrate' used in this specification may refer to the substrate itself or a laminated structure including a predetermined layer or film formed on the substrate and its surface. In addition, the term `surface of the substrate' in this specification may refer to the exposed surface of the substrate itself or the outer surface of a predetermined layer or film formed on the substrate.

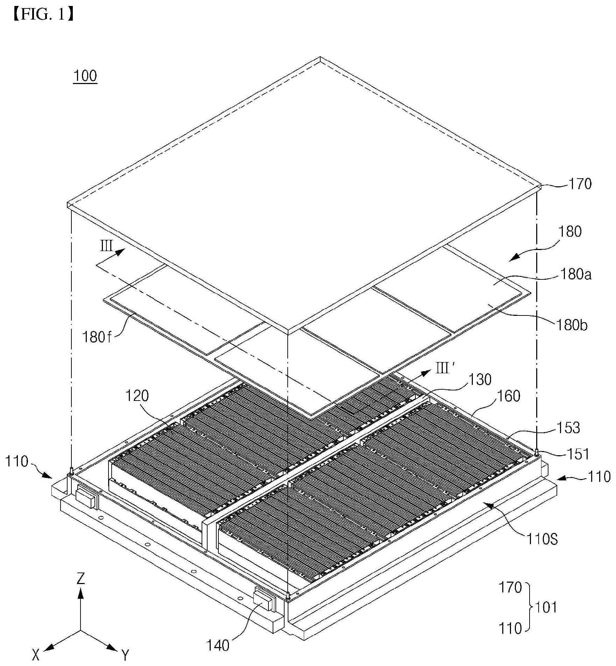

FIG. 1 is a perspective view of a battery pack 100 according to exemplary aspects of the present disclosure.

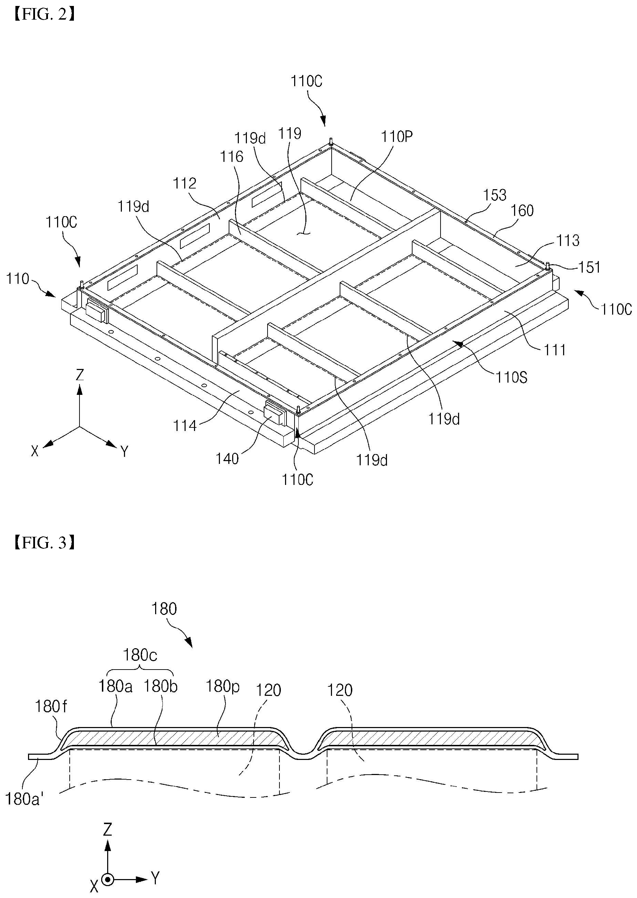

FIG. 2 is a perspective view illustrating some elements of a battery pack 100 according to exemplary aspects of the present disclosure.

In FIGS. 1 and 2, the battery pack 100 is shown as being defined in a vertical coordinate system defined by a first direction along the X-axis, a second direction along the Y-axis, and a third direction along the Z-axis, perpendicular to each other, but the first, second, and third directions need only be perpendicular relative to each other and are not particularly limited.

Referring to FIGS. 1 and 2, the battery pack 100 may include a lower case 110, battery cells 120, a center beam 130, a cross beam 116, a plurality of exhaust devices 140, a plurality of first embedment guides 151, a plurality of second embedment guides 153, a pack gasket 160, and an upper case 170. The battery pack 100 may be the final form of a battery system mounted on a mobility or the like. As used herein, a secondary battery may refer to any battery cell capable of being charged and discharged.

A pack housing 101, which defines the appearance of the battery pack 110, may include the lower case 110 and the upper case 170.

The lower case 110 may provide an accommodation space 119 for a plurality of battery cells 120 to be mounted. In some aspects, the lower case 110 may include a plate part 110P, and a side wall 110S. Two directions substantially parallel to the plate part 110P are defined as a first direction (e.g., an X-axis direction) and a second direction (e.g., a Y-axis direction), and a direction substantially perpendicular to the plate part 110P of the housing 110 is defined as a third direction (e.g., a Z-axis direction). Each of the X-axis direction, the Y-axis direction, and the Z-axis direction may be substantially perpendicular to each other. Unless otherwise noted, the definition of direction is the same for the following drawings.

A plurality of battery cells 120 may be disposed on the plate part 110P of the lower case 110. The plate part 110P may support the plurality of battery cells 120. The plate part 110P may include a substantially parallel upper surface and a lower surface. The upper surface of the plate part 110P may face the plurality of battery cells 120. The lower surface of the plate part 110P is the opposite surface of the upper surface of the plate part 110P.

The side walls 110S may horizontally enclose the plurality of battery cells 120. The side walls 110S may protect the plurality of battery cells 120 in a lateral direction. The side wall 110S may include a first side wall 111, a second side wall 112, a third side wall 113, and a fourth side wall 114. The first to fourth side walls 111, 112, 113, 114 may be fixed to each other by methods such as, but not limited to, friction stir welding, spot welding, and the like.

The first and second side walls 111, 112 may be substantially perpendicular to the second direction (e.g., to the Y-axis direction). Each of the third and fourth side walls 113, 114 can be substantially perpendicular to the first direction (e.g., to the X-axis direction). In some aspects, the first and second side walls 111, 112 may cover the sides of the plate part 110P. In some aspects, the third and fourth side walls 113, 114 may be disposed on the plate part 110P.

In some aspects, the first to fourth side walls 111, 112, 113, 114 may be provided by an extrusion process. According to exemplary aspects, the first to fourth side walls 111, 112, 113, 114 may include an internal hollow space, thereby allowing the side wall 110S to be lightweight. According to exemplary aspects, the hollow space in the first to fourth side walls 111, 112, 113, 114 may be one among a venting path for gases and a channel for a coolant.

Hereinafter, the technical ideas of the present disclosure will be described with reference to an aspect in which each of the plurality of battery cells 120 does not include a module frame. However, this is a non-limiting example and does not in any sense limit the technical ideas of the present disclosure. A person of ordinary skill in the art would readily realize a battery pack employing battery modules that include module frames that expose one edge of the battery cells based on the descriptions disclosed herein.

In some aspects, the accommodation space 119 may be compartmentalized into two or more compartments 119d by one or more compartment beams 130, 116. The compartment beams 130, 116 may include a center beam 130. In some aspects, the compartment beams 130, 116 may include one or more cross beams 116.

The center beam 130 may isolate the elements mounted on the lower case 110 from each other. Accordingly, the center beam 130 may protect the plurality of battery cells 120 while preventing unwanted short circuits between them.

The center beam 130 may extend between the third and fourth side walls 113, 114. The center beam 130 may extend in a first direction (e.g., in the X-axis direction). The center beam 130 may abut the third side wall 113 and the fourth side wall 114. The center beam 130 may isolate the plurality of battery cells 120 from each other. The center beam 130 may be interposed between the plurality of battery cells 120. In some aspects, the center beam 130 may divide the accommodation space 119 into two regions in a second direction (e.g., along the Y-axis).

In some aspects, the cross beam 116 may be provided to divide the accommodation space 119 into two or more regions in a first direction (e.g., in the X-axis direction). The cross beam 116 may further isolate the elements isolated by the center beam 130.

Some of the cross beams 116 may extend in a second direction (e.g., in the Y-axis direction) between the center beam 130 and the first side wall 111. Other cross beams 116 may extend in a second direction (e.g., in the Y-axis direction) between the center beam 130 and the second side wall 112. In some aspects, the cross beams 116 may be provided to define a space in which a single stack of battery cells or a group of battery cells is accommodated.

The arrangement of the center beam 130, cross beam 116, and plurality of battery cells 120 illustrated in FIG. 1 is a non-limiting example and is not intended to limit the technical ideas of the present disclosure in any sense. One of ordinary skill in the art will readily arrive at battery packs comprising various arrangements and numbers of center beams and battery cells based on those described herein.

In some aspects, a plurality of exhaust devices 140 may be coupled to the fourth side wall 114. The fourth side wall 114 may include a plurality of exhaust holes associated with the plurality of exhaust devices 140. The plurality of exhaust holes may be configured to provide a pathway for discharging gases and heat within the battery pack 100.

The plurality of exhaust devices 140 may be configured to delay thermal propagation by releasing hot gases inside the battery pack 100 to the outside in the event that at least one of the plurality of battery cells 120 is in a thermal runway condition.

Here, thermal runaway of the plurality of battery cells 120 is a condition in which a temperature change in the plurality of battery cells 120 causes the temperature change to accelerate further, which is uncontrollable positive feedback. The plurality of battery cells 120 in thermal runaway state exhibits a rapid increase in temperature and may emit large amounts of high-pressure gases and combustion debris.

In some aspects, the plurality of first embedment guides 151 may be disposed on the side wall 110S. The plurality of first embedment guides 151 may be disposed on the corners 110C of the upper surface of the side wall 110S. The plurality of first embedment guides 151 may be coupled to the corners 110C of the upper surface of the side wall 110S. The plurality of first embedment guides 151 may be partially embedded in the side wall 110S. The plurality of first embedment guides 151 may partially protrude from the side wall 110S.

In some aspects, the plurality of second embedment guides 153 may be disposed on the side wall 110S. The plurality of second embedment guides 153 may be disposed on the upper surface of the side wall 1108S. The plurality of second embedment guides 153 may be interposed between the corners 110C of the side wall 110S. The plurality of second embedment guides 153 may be interposed between the plurality of first embedment guides 151. The plurality of second embedment guides 153 may be coupled to the upper surface of the side wall 110S. The plurality of second embedment guides 153 may be partially embedded in the side wall 110S. The plurality of second embedment guides 153 may partially protrude from the side wall 110S.

In some aspects, each of the plurality of first and second embedment guides 151, 153 may include a metallic material. Each of the plurality of first and second embedment guides 151, 153 may include, for example, aluminum. Each of the plurality of first and second embedment guides 151, 153 may include steel, such as, for example, carbon steel, nickel steel, chromium steel, nickel-chromium steel, and manganese steel.

The battery pack 100 may further include electrical components. In some aspects, the electrical components may be mounted on the lower case 110. In some aspects, the electrical components may be disposed between the fourth side wall 114, where the exhaust device 140 is installed, and the plurality of battery cells 120. In some aspects, the electrical components may include any electronics required to drive the battery pack.

In some aspects, the electrical components may include, for example, a battery management system (BMS). The BMS may be configured to perform monitoring, balancing, and control of the battery pack. In some aspects, monitoring of the battery pack 100 may include measuring the voltage and current of certain battery cells of the plurality of battery cells 120 and measuring the temperature of set locations within the battery pack 100. In some aspects, the battery pack 100 may include instruments for measuring the voltage, current, and temperature described above.

Balancing the battery pack 100 is the act of reducing a deviation between the plurality of battery cells 120. Controlling the battery pack 100 includes preventing the occurrence of overcharging, overdischarging, and overcurrent. The monitoring, balancing, and controlling allows the battery pack 100 to operate under optimal conditions, whereby the shortening of the life of each of the plurality of battery cells 120 may be prevented or reduced.

The electrical components may further include a cooling device, a power relay assembly (PRA), a safety plug, and the like. The cooling device may include a cooling fan. The cooling fan may circulate air within the battery pack 100 to prevent overheating of each of the plurality of battery cells 120. The PRA may be configured to supply or disconnect power from the high-voltage battery to an external load (e.g., a motor of a vehicle). The PRA may protect the plurality of battery cells 120 and the external load (e.g., the motor of the vehicle) by shutting off the power supply to the external load (e.g., the motor of the vehicle) in the event of an abnormal voltage, such as a voltage surge.

The battery pack 100 may further include a plurality of busbars configured to electrically connect the plurality of battery cells 120. The plurality of battery cells 120 may be connected in series and/or in parallel by the plurality of busbars. Accordingly, the battery pack 100 may be configured to output a high voltage to an external load (e.g., a motor of a vehicle).

A gasket 160 may include a material that is elastic in response to an applied pressure. The gasket 160 may include, for example, a rubber synthesized from a material such as ethylene-propylene diene monomer (EPDM). When the lower case 110 and the upper case 170 are coupled, the gasket 160 may be interposed between the lower case 110 and the upper case 170. The lower case 110 and the upper case 170 may press against the gasket 160 such that more or less deformation of the gasket 160 occurs. Accordingly, the battery pack 100 may be sealed, and external fluids may be kept out of the inner space of the battery pack 100.

The upper case 170 may be coupled to the lower case 110 to cover the accommodation space 119. In some aspects, the upper case 170 may include a main surface and an edge part. The main surface may cover elements mounted to the battery pack 100, such as the plurality of battery cells 120 and electrical components. The edge part is a side abutting the lower case 110. In some aspects, the upper case 170 may have a flat plate shape, in which case the edge part may horizontally surround the perimeter. In some aspects, the main surface may be elevated relative to the edge part, and the edge part and the main surface may be connected by a curved portion.

In some aspects, the upper case 170 may be coupled to the side wall 110S of the lower case 110 by a plurality of first and second embedment guides 151, 153. According to exemplary aspects, the battery pack 100 may further include elements coupled to the plurality of first and second embedment guides 151, 153 to fix the upper case 170 to the side wall 110S of the lower case 110. The elements may include, but are not limited to, bolts and nuts.

The battery pack 100 may further include an endothermic pad 180. FIG. 3 is a side cross-sectional view illustrating a section through the endothermic pad 180 along line III-III' of FIG. 1.

Referring to FIGS. 1 and 3, the endothermic pad 180 may be configured to absorb heat generated by the battery cells 120 and/or block or delay the transfer of the heat.

In some aspects, the endothermic pad 180 may be provided on the upper part of the battery cells 120. In some aspects, the endothermic pad 180 may be provided between the upper case 170 and the battery cells 120.

The endothermic pad 180 may have a predetermined area along a plane perpendicular to the third direction (e.g., the Z-axis direction). The endothermic pad 180 may include a laminate sheet 180c having an inner space. The laminate sheet 180c may comprise the exterior of the endothermic pad 180. In some aspects, the endothermic pad 180 may include an absorbent member 180p and an endothermic material provided in an inner space of the laminate sheet 180c. The laminate sheet 180c may include a first layer 180a and a second layer 180b that are substantially parallel, and the inner space may be defined between the first layer 180a and the second layer 180b.

The laminate sheet 180c may be a single layer, or may be a laminate comprising two or more layers laminated together. In some aspects, the laminate sheet 180c may include a multi-layer structure with an outermost outer polymer layer made of an insulating material such as polyethylene terephthalate (PET) or nylon, a metal layer made of aluminum to maintain mechanical strength and prevent moisture and oxygen penetration, and an inner polymer layer made of a polyolefin-based material that is thermally adhesive and acts as a sealing material.

The endothermic material may be absorbed by the absorbent member (180p) and may be a material that is capable of phase changing with a change in temperature. The laminate sheet 180c may be configured to deform in response to the phase change of the endothermic material.

In some aspects, the absorbent member 180p may include an absorbent polymer, such as a super absorbent polymer (SAP). The super absorbent polymer may be any material known in the art and is not particularly limited. In some aspects, the super absorbent polymer may include polyacrylamide, polyacrylic acid, polymethacrylic acid, polyethylene oxide, polyvinyl alcohol, gelatin, polysaccharide, chitosan, sodium carboxymethylcellulose, or combinations thereof, but the present disclosure is not limited thereto. In some aspects, the absorbent member 180p may be in the form of a powder, granule, pellet, platelet, slab, or the like, without limitation.

The absorbent member 180p may have a liquid phase endothermic material absorbed therein. In some aspects, the endothermic material may include a material capable of repeated vaporization and condensation over the operating temperature range of the battery cells 120 and over a pressure range within and around atmospheric pressure. For example, the endothermic material may include a material capable of vaporizing or condensing at a pressure range of about 1 atmosphere to about 10 atmospheres and a temperature of about 70°C to about 130°C.

In some aspects, the endothermic material may include water, ethanol, isopropyl alcohol, or the like. In a liquid state, the endothermic material may be absorbed within the absorbent member 180p. The endothermic material may be vaporized by heat transferred from the battery cells 120 through the second layer 180b of the laminate sheet 180c. The vaporized endothermic material may exist in a gaseous state within the laminate sheet 180c and then condense and liquefy as it cools, and may be reabsorbed within the absorbent member 180p. Since the heat transferred from the battery cells 120 is used as a temperature increase and enthalpy of vaporization of the endothermic material, the transfer of the heat to other neighboring battery cells 120 may be reduced or blocked.

The endothermic pad 180 may include a bending part 180f. The bending part 180f may be formed by a forming process. The forming process may be a process of molding the laminate sheet 180c under pressure so that the laminate sheet 180c has a desired shape. The laminate sheet 180c may be molded by the forming process into a shape that is at least partially bent.

As shown in FIG. 3, the bending part 180f can maintain the bending state even when no external force is applied. In other words, the bending state can be maintained even when no external force is applied to the endothermic pad 180 by the upper case 170 and the battery cells 120. However, the bending state when no external force is applied to the endothermic pad 180 need not be exactly the same as the bending state when the endothermic pad 180 is assembled with the upper case 170 and battery cells 120 interposed therebetween. In some aspects, the bending state of the endothermic pad 180 when no external force is applied to the endothermic pad 180 may be more or less deformed when assembled between the upper case 170 and the battery cells 120, but the overall bending state of the endothermic pad 180 may be largely maintained.

In some aspects, the bending part 180f may only be provided on the first layer 180a. In some aspects, the bending part 180f may only be provided in the second layer 180b. In some aspects, the bending part 180f may be provided in the first layer 180a and the second layer 180b.

In some aspects, the bending part 180f may be provided in the first layer 180a and the second layer 180b, wherein the bending part in the first layer 180a and the bending part in the second layer 180b may have corresponding shapes. As used herein, 'corresponding shapes' means having the same or similar shape and/or orientation of the bends, although the degree to which they are bent may be somewhat different.

In some aspects, the bending part of the first layer 180a and the bending part of the second layer 180b may extend at least partially spaced apart from each other. As shown in FIG. 3, each of the first layer 180a and the second layer 180b includes a portion extending substantially in the Z-axis direction and a planar portion bent therefrom and extending in a direction perpendicular to the Z-axis direction.

In some aspects, the laminate sheet 180c may include a pattern of a bending part 180f repeated a plurality of times at a predetermined spacing. In the aspect shown in FIGS. 1 and 3, the laminate sheet 180c includes patterns of bending parts 180f that repeats three times in the X-axis direction and twice in the Y-axis direction.

In some aspects, the endothermic pad 180 may have a joint part 180m. In some aspects, the joint part 180m may be a portion formed by the fusion of opposing laminate sheets (i.e., the first layer 180a and the second layer 180b) of the endothermic pad 180. In some aspects, the endothermic pad 180 may be configured such that the joint part 180m is opened when a thermal event occurs within it, or a specific location of the joint part 180m is opened.

As shown in FIG. 1, placing the endothermic pad 180 between the upper surface of the battery cells 120 and the upper case 170 can effectively attenuate the flame energy when a thermal event occurs in a particular battery cell 120, and can mitigate or prevent the upper case 170 from being damaged by heat.

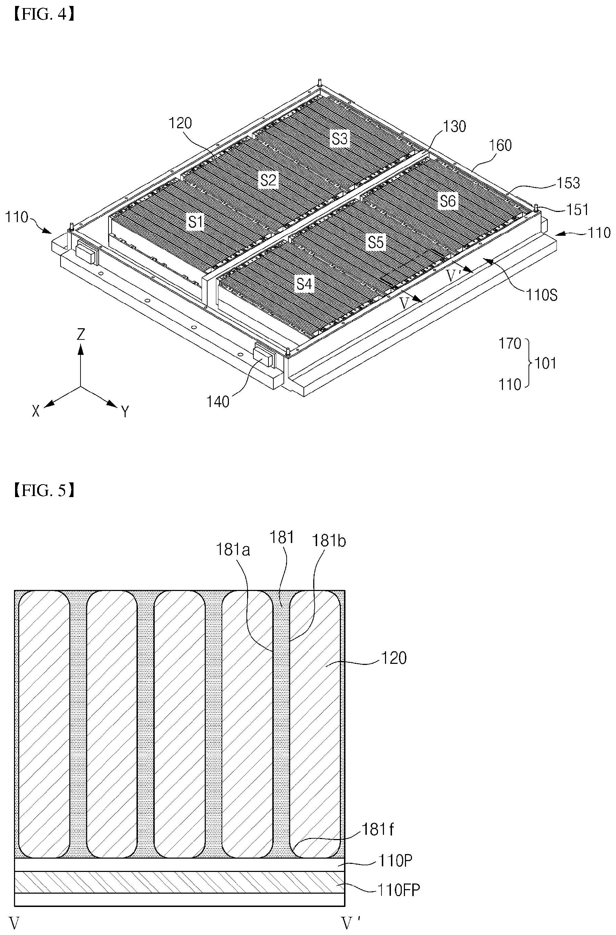

FIG. 4 is an enlarged perspective view of the battery cells 120 mounted within the lower case 110, according to one aspect of the present disclosure.

Referring to FIG. 4, battery cell stacks S1, S2, ..., S6 are disposed within each of the regions defined by the respective side walls 111, 112, 113, 114, center beam 130, and cross beam 116 of the lower case 110. Each of the battery cell stacks S1, S2, ..., S6 includes a plurality of battery cells 120. As used herein, a battery cell stack may simply refer to a collection of a plurality of battery cells, or it may refer to an assembly of a plurality of battery cells accommodated within a particular frame.

In some aspects, the battery cells 120 may be pouch-type battery cells, but the present disclosure is not limited thereto. In some aspects, the battery cells 120 may be cylindrical battery cells or prismatic battery cells.

In some aspects, the battery cells 120 may have a thin plate-like body and may be constructed as a pouch cell. The pouch cell may include an electrode assembly including a positive electrode, a separator, and a negative electrode alternately stacked within a pouch of laminate sheets. At least one side of the electrode assembly may have electrode tabs extending therefrom to connect with cell leads. The positive electrode and negative electrode may be fabricated by applying a slurry of electrode active material, binder polymer, conductive material, and other additives to at least one side of the current collector. For the positive electrode, conventional positive electrode active materials such as lithium-containing transition metal oxides may be used, and for the negative electrode, conventional negative electrode active materials such as lithium metals, carbon materials, and metal compounds or mixtures thereof from which lithium ions can be absorbed and released may be used. Also, a conventional porous polymer film used in lithium secondary batteries can be employed as the separator.

An electrolyte accommodated in the pouch with the electrode assembly may be employed as an electrolyte for a conventional lithium secondary battery. The pouch is formed of a sheet material and comprises a compartment for accommodating the electrode assembly. The sheet material comprising the pouch may comprise a multi-layer structure with an outermost outer polymer layer comprising an insulating material such as polyethylene terephthalate (PET) or nylon, a metal layer comprising aluminum to maintain mechanical strength and prevent the penetration of moisture and oxygen, and an inner polymer layer comprising a polyolefin-based material that is thermally adhesive and acts as a sealing material.

The sheet material forming the pouch may have a predetermined adhesive polymer layer interposed between the inner polymer layer and the metal layer, and between the outer polymer layer and the metal layer, as required. The adhesive polymer layer is for smooth attachment between dissimilar materials and is formed in a single layer or multiple layers, and the material is typically a polyolefin-based polymer, or for smooth processing, a polyurethane polymer may be used, and mixtures thereof may also be employed.

The plurality of battery cells 120 may be arranged in a first direction (e.g., in the X-axis direction). In some aspects, the first battery cell stack S1, the second battery cell stack S2, and the third battery cell stack S3 may be arranged in the first direction (e.g., in the X-axis direction). In some aspects, the fourth battery cell stack S4, the fifth battery cell stack S5, and the sixth battery cell stack S6 may be arranged in the first direction (e.g., in the X-axis direction).

In some aspects, the first battery cell stack S1 and the fourth battery cell stack S4 may be arranged in a second direction (e.g., along the Y-axis). In some aspects, the second battery cell stack S2 and the fifth battery cell stack S5 may be arranged in a second direction (e.g., along the Y-axis). In some aspects, the third battery cell stack S3 and the sixth battery cell stack S6 may be arranged in a second direction (e.g., in the Y-axis direction).

FIG. 5 is a schematic side cross-sectional view illustrating the endothermic pad 181 inserted between the battery cells 120. The side cross-section shown in FIG. 5 is a section cut through along, for example, the V-V' line of FIG. 4.

Referring to FIGS. 4 and 5, the endothermic pad 181 may have a shape that extends in a second direction (e.g., in the Y-axis direction) that is generally in the longitudinal direction of the battery cells 120. In some aspects, the endothermic pad 181 may extend in the second direction (e.g., in the Y-axis direction) and may be in direct contact with the sides of neighboring battery cells 120.

The endothermic pad 181 may have a predetermined area along a plane perpendicular to the first direction (e.g., the X-axis direction). In some aspects, the endothermic pad 181 may be interposed between a pair of battery cells 120. A first side 181a forming one side of the endothermic pad 181 may be in direct contact with a battery cell 120 of one of the pair of battery cells 120. Further, the second side 181b forming the other side of the endothermic pad 181 may be in direct contact with the battery cell 120 of the other of the pair of battery cells 120.

In some aspects, the sides of the battery cells 120 may include curved portions. As shown in FIG. 5, the sides 181a, 181b where the endothermic pad 181 faces the battery cells 120 may have bending parts 181f that correspond to the curved parts of the sides of the battery cells 120.

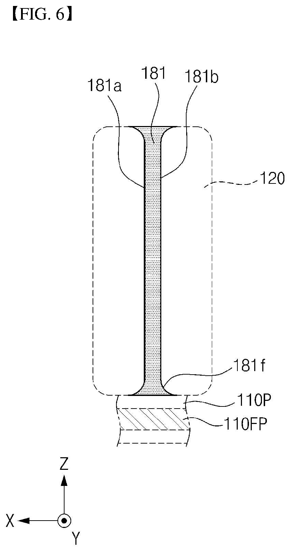

FIG. 6 is a side cross-sectional view illustrating the endothermic pad 181 of FIG. 5 without contact with the battery cells 120.

Referring to FIG. 6, the endothermic pad 181 may substantially maintain the bent state of the bend part 181f even when the endothermic pad 181 is not in contact with the battery cells 120. While there may be more or less variation in the shape of the bending part 181f when the endothermic pad 181 is in contact with neighboring battery cells 120 and when it is spaced away from the battery cells 120, the bend state of the bending part 181f may be largely maintained.

Referring again to FIG. 5, in some aspects, the endothermic pad 181 may be thermally connected to the lower case 110 and may transfer heat received from the battery cells 120 to the plate part 110P. In some aspects, the endothermic pad 181 may be thermally connected to the upper case 170 and/or the endothermic pad 180 (see FIG. 1). As used herein, referring to the heat sink pad 181 being 'thermally coupled' to something may mean that a majority of the heat emitted from the endothermic pad 181 is removed through that something, such as more than 50% of the heat emitted from the endothermic pad 181 is removed through that something.

In some aspects, the plate part 110P of the lower case 110 may include a heat sink 110FP. For example, the heat sink 110FP may include a flow path configured for cooling fluid to flow therein. Thus, the heat transferred to the lower plate part 110P via the endothermic pad 181 may be smoothly removed by the cooling fluid flowing through the heat sink 110FP. To this end, the endothermic pad 181 may be disposed closer to the lower case 110 than to the upper case 170.

In some aspects, the endothermic pads 181 may be alternately disposed with the battery cells 120, one by one. In some aspects, the endothermic pads 181 may be provided one for every two or more battery cells 120. That is, two or more battery cells 120 may be disposed between two closest neighboring endothermic pads 181.

In some aspects, the endothermic pads 181 may be provided at both ends of the first direction (e.g., X-axis direction) of the plurality of battery cells 120 provided within one compartment space 119d. In this case, a thermal event occurring within one compartment space 119d may be effectively prevented or delayed from transferring to another compartment space 119d neighboring thereto. In this case, the endothermic pads 181 may be arranged to directly face the cross beam 116.

In some aspects, two battery cells 120 may be disposed between two closest neighboring endothermic pads 181. In this case, at least one side of any battery cell 120 is in contact with the endothermic pad 181, so that even if a thermal event occurs to a battery cell 120, heat transfer to the neighboring battery cell 120 may be minimized.

The endothermic pad 181 has a shape that corresponds to the complex shape of the object to be cooled (e.g., the battery cell 120), which has the effect of providing good endothermic efficiency and contributing to improved energy density by increasing space efficiency within the battery pack 100.

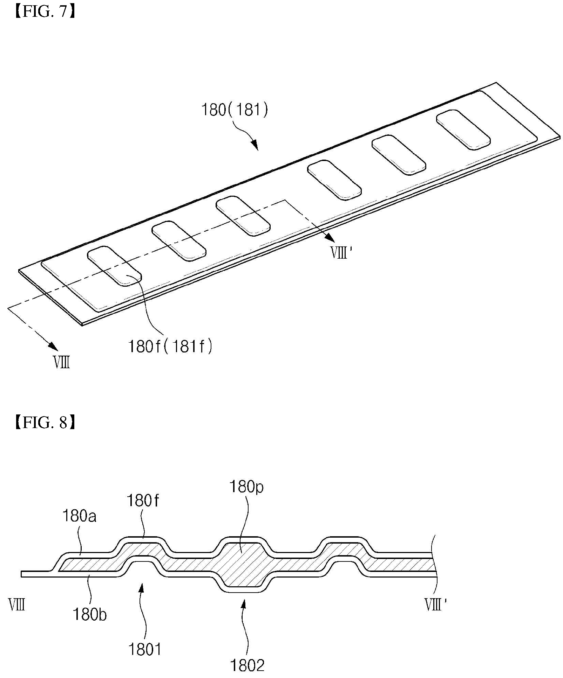

FIG. 7 is a perspective view illustrating an endothermic pad 180 according to one aspect of the present disclosure, and FIG. 8 is a cross-sectional view illustrating a section through the endothermic pad 180 of FIG. 7 along line VIII-VIII'.

Referring to FIGS. 7 and 8, the endothermic pad 180 may include bending parts such as embossing structures 1801, 1802 formed by the forming process. The embossing structures 1801, 1802 remain in a bent state even when no external force is applied. In some aspects, when an external force is applied, the embossing structures 1801, 1802 may deform some in response to the external force.

In some aspects, the first embossing structure 1801 may include correspondingly shaped bending parts in the first layer 180a and the second layer 180b. In some aspects, the first layer 180a and the second layer 180b of the first embossing structure 1801 may be substantially similar in shape and orientation of the bends. In some aspects, the first layer 180a and the second layer 180b of the first embossing structure 1801 may extend at least partially at a constant spacing.

In some aspects, the second embossing structure 1802 may include corresponding shaped bending parts in the first layer 180a and the second layer 180b. In some aspects, the first layer 180a and the second layer 180b of the second embossing structure 1802 may have similarly shaped bends but opposite bend directions. In some aspects, the first layer 180a and the second layer 180b of the second embossing structure 1802 may extend at least partially at a constant spacing.

The first embossed structure 1801 and/or the second embossed structure 1802 may be repeated a plurality of times at regular spacings. In some aspects, the endothermic pad 180 may have repeating bending parts at predetermined spacings in the first layer 180a. In FIG. 8, convex bending parts are shown repeating horizontally toward the top of the drawing, but the present disclosure is not limited to this. In some aspects, the endothermic pad 180 may have repeating bending parts at predetermined spacings in the second layer 180b. FIG. 8 illustrates alternating concave and convex bending parts toward the bottom of the drawing, but the present disclosure is not limited thereto.

The endothermic pad 180 may have a first embossing structure 1801 and a second embossing structure 1802 to increase adhesion with the object to be cooled, thereby improving endothermic efficiency.

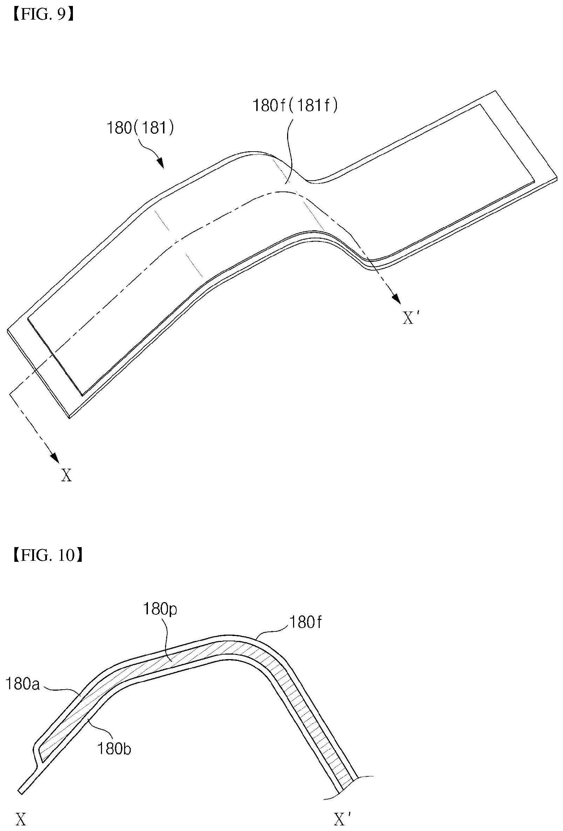

FIG. 9 is a perspective view illustrating an endothermic pad according to another aspect of the present disclosure, and FIG. 10 is a cross-sectional view illustrating a section through the endothermic pad 180 of FIG. 9 along line X-X'.

Referring to FIGS. 9 and 10, the endothermic pad 180 may have the entirety of the first layer 180a bent by a forming process. The second layer 180b may also be bent to correspond to the shape of the first layer 180a. The first layer 180a and the second layer 180b may extend at least partially spaced apart from each other.

In some aspects, the center part of the first layer 180a may be formed to be convex relative to the outer perimeter of the first layer 180a. In some aspects, the center part of the second layer 180b may not be concave or convex relative to the outer periphery of the second layer 180b, and may extend along the same side as the outer periphery.

The endothermic pad 180 may be molded in a shape that is substantially conformable to the shape of the object to be cooled. The shape of such an endothermic pad 180 may remain substantially bent even when no external force is applied by the object to be cooled. In some aspects, the endothermic pad 180 may deform in response to an external force applied by the object to be cooled.

The endothermic pad 180 may have an overall bent shape to increase adhesion to the object to be cooled, which may improve endothermic efficiency.

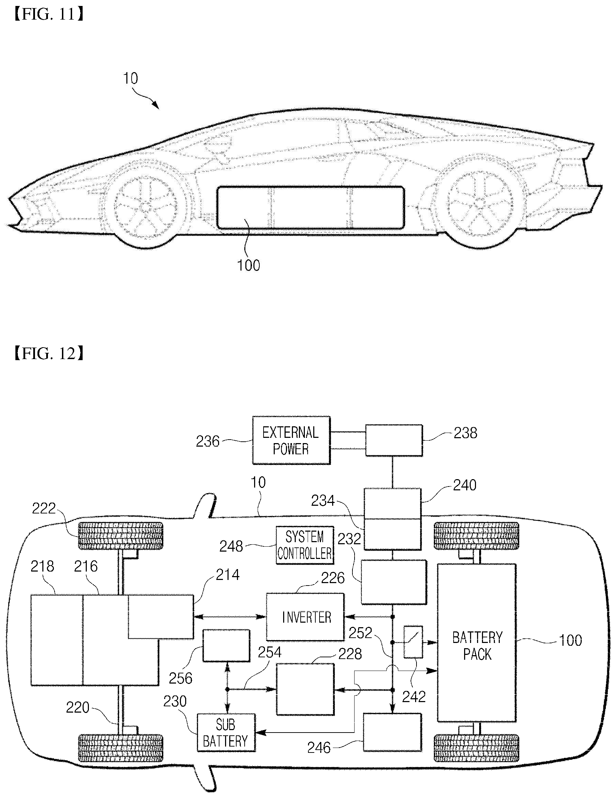

FIG. 11 is a side view schematically illustrating an electrified vehicle 10 according to one aspect of the present disclosure. FIG. 12 is a schematic view conceptually illustrating a battery pack 100 and other components of the electrified vehicle 10.

Referring to FIGS. 11 and 12, the electrified vehicle 10 according to one aspect of the present disclosure may include at least one battery pack 100. The electrified vehicle 10 may include, for example, a body having a compartment for accommodating the at least one battery pack 100. For example, the electrified vehicle 10 may be a battery electric vehicle (BEV), a plug-in hybrid-electric vehicle (PHEV), or a full hybrid-electric vehicle (FHEV).

The electrified vehicle 10 may include one or more electrical machines 214 mechanically coupled to one or more gearboxes or hybrid transmissions 216. The electrical machine 214 may operate as a motor or a generator. Further, if the electrified vehicle 10 is a PHEV or FHEV, the electrified vehicle 10 may include an engine 218, and the hybrid transmission 216 may be mechanically coupled to the engine 218.

Further, the hybrid transmission 216 may be mechanically coupled to the drive shaft 220, which is mechanically coupled to the wheels 222. The electrical machine 214 may propel or decelerate in response to the on-off of the engine 218, or may act as a generator to recover energy. The electrical machine 214 may allow the engine 218 to operate at a more efficient speed, thereby reducing emissions, and may allow the electrified vehicle 10 to operate in an electric mode with the engine 218 off under certain conditions. The engine 218 is omitted when the electrified vehicle 10 is a BEV.

The battery pack 100 stores energy utilized by the electrical machine 214, which is described with reference to FIGS. 1 through 9, so that duplicative description is omitted. The battery pack 100 may provide a high voltage direct current (DC) output. The contactor module 242 may include one or more contactors configured to disconnect the battery pack 100 from the high voltage bus 252 when open and to connect the battery pack 100 to the high voltage bus 252 when closed.

One or more inverters 226 may be electrically connected to the high voltage bus 252. The inverter 226 may also be connected to the electrical machine 214, and may transfer energy in both directions between the battery pack 100 and the electrical machine 214. For example, the battery pack 100 may provide a DC voltage while the electrical machine 214 is operating in three-phase alternating current. The inverter 226 may convert the DC voltage into three-phase AC current for the electrical machine 214 to operate. In regenerative mode, the inverter 226 may convert the three-phase alternating current coming from the electrical machine 214 to a DC voltage that may be applied to the battery pack 100.

In some aspects, the battery pack 100 may provide energy for other electrical systems of the vehicle in addition to energy for vehicle propulsion. The electrified vehicle 10 may include a DC/DC converter module 228, which converts a high voltage DC output from the high voltage bus 252 to a low voltage DC level on the low voltage bus 254 that is compatible with a low voltage load 256. The output of the DC/DC converter module 228 may be electrically connected to a sub battery 230 (e.g., a 12V battery) to charge the sub battery 230. The low voltage load 256 may be electrically connected to the sub battery 230 via the low voltage bus 254. One or more high voltage loads 246 may be connected to the high voltage bus 252. The high voltage loads 246 may be, for example, a fan, an electric heating element, and/or an energy conditioning compressor.

The electrified vehicle 10 may be configured to recharge the battery pack 100 with an external power 236. In some aspects, the external power 236 may be electrically connected to an electric vehicle supply equipment (EVSE) 238. The external power 236 may provide DC or AC power to the EVSE 238, and the EVSE 238 may include circuitry to manage and control energy transfer between the external power 236 and the electrified vehicle 10.

The EVSE 238 may include a charging connector 240 that may be connected to a charging port 234 of the electrified vehicle 10. The charging port 234 may be any port capable of transmitting power from the EVSE 238 to the electrified vehicle 10. The charging port 234 may be electrically connected to the power conversion module 232. The power conversion module 232 processes the power coming from the EVSE 238 and converts it to a level of voltage and current suitable for the battery pack 100.

In some aspects, the battery pack 100 may be electrically connected to the sub battery 230. The sub battery 230 may be configured to provide the power required to perform some of the functions of the battery pack 100.

All of the functions of the electrified vehicle 10 described above may be controlled by a system controller 248.

Although aspects of the present disclosure have been described in detail above, one of ordinary skill in the art to which the present disclosure belongs will be able to make many modifications to the present disclosure without departing from the spirit and scope of the present disclosure as defined in the appended claims. Accordingly, future modifications on the aspects of the present disclosure will not depart from the art of the present disclosure.

### [Description of Reference Numerals]

100: BATTERY PACK
101: PACK HOUSING
110: LOWER CASE
110FP: HEAT SINK
110P: PLATE PART
110S: SIDE WALL
116: CROSS BEAM
120: BATTERY CELL
130: CENTER BEAM
140: EXHAUST DEVICE
160: PACK GASKET
170: UPPER CASE
180, 181: ENDOTHERMIC PAD
214: ELECTRICAL MACHINE
216: TRANSMISSION
218: ENGINE
226: INVERTER
228: DC/DC CONVERTER MODULE
230: SUB BATTERY
232: POWER CONVERSION MODULE
234: CHARGING PORT
236: EXTERNAL POWER
238: ELECTRIC VEHICLE CHARGING DEVICE
240: CHARGING CONNECTOR
242: CONTACTOR MODULE
246: HIGH VOLTAGE LOAD
248: SYSTEM CONTROLLER
252: HIGH VOLTAGE BUS
256: LOW VOLTAGE LOAD

## Claims

1. An endothermic pad for a secondary battery, comprising:
a pouch having an inner space and an endothermic material accommodated within the inner space,
wherein the pouch comprises a bending part processed by a forming process to define the inner space,
wherein the bending part remains bent when no external force is applied from outside the pouch.

2. The endothermic pad of claim 1, wherein
the pouch comprises bending parts in each of a first layer and a second layer of the pouch corresponding to each other in shape.

3. The endothermic pad of claim 1, wherein
the pouch comprises a first layer and a second layer facing each other while defining the inner space, wherein
at the bending part, the first layer and the second layer extend in a first direction at least partially while keeping a constant distance from each other.

4. The endothermic pad of claim 1, further comprising:
a super absorbent polymer, wherein the endothermic material is absorbed by the super absorbent polymer.

5. The endothermic pad for a secondary battery of claim 4, wherein
the super absorbent polymer is in a powdered state and the endothermic material is water.

6. The endothermic pad for a secondary battery of claim 1, wherein
the pouch comprises a first layer and a second layer facing each other while defining the inner space,
the pouch comprises a pattern of the bending part repeating a plurality of times at predetermined spacings in at least one of the first layer and the second layer.

7. A battery pack comprising:
a plurality of battery cells arranged in a first direction;
at least one endothermic pad disposed between the plurality of battery cells; and
a pack housing storing the plurality of battery cells, wherein
the endothermic pad comprises:
a pouch comprising a bending part corresponding to at least a portion of an outer shape of a battery cell of the plurality of battery cells; and
a super absorbent polymer and an endothermic material absorbed by the super absorbent polymer.

8. The battery pack of claim 7, wherein
the endothermic pad is provided between two neighboring battery cells.

9. The battery pack of claim 7, wherein
the bending part of the pouch remains bent when no external force is applied by the plurality of battery cells.

10. The battery pack of claim 7, wherein
the endothermic pad is between the plurality of battery cells and the pack housing, wherein
the endothermic pad comprises a bending part corresponding to a shape of the plurality of battery cells and the pack housing, wherein
the bending part is maintained in a bent state when no external force is applied by the battery cell and the pack housing.

11. The battery pack of claim 7, wherein
the pouch comprises a first layer and a second layer facing each other while defining an inner space, wherein
at the bending part, the first layer and the second layer extend at least partially in a first direction while keeping a constant distance from each other.

12. The battery pack of claim 11, wherein
a center part of the first layer is formed to be convex relative to an outer periphery of the first layer, and an entirety of the center part and the outer periphery of the first layer is bent.
